# EUROPÄISCHE PATENTSCHRIFT

(11) **EP 1 826 042 B1**
(45) Veröffentlichungstag und Bekanntmachung des Hinweises auf die Patenterteilung: **02.06.2010**
(21) Anmeldenummer: 07002888.1
(22) Anmeldetag: 12.02.2007
(51) Int. Cl.: B60H 1/34

(54) **Kraftfahrzeug-Belüftungssystem**
Motor vehicle ventilation system
Système de ventilation pour véhicule automobile

(30) Priorität: 28.02.2006 DE 102006009577
(43) Veröffentlichungstag der Anmeldung: 29.08.2007
(73) Patentinhaber: Behr GmbH & Co. KG, 70469 Stuttgart (DE)
(72) Erfinder: Berndt, Ralf, 71254 Ditzingen-Schöckingen (DE); Getto, Oliver, Dipl.-Ing., 70567 Stuttgart (DE); Hegner, Hilmar, 71364 Winnenden (DE)

(56) Entgegenhaltungen:
- EP-A- 1 238 835
- DE-A1- 19 750 381
- DE-U1- 20 205 512
- JP-A- 60 018 415
- US-A1- 2005 076 668
- US-B2- 6 749 656

## Beschreibung

Die Erfindung betrifft ein Kraftfahrzeug-Belüftungssystem gemäß dem Oberbegriff des Anspruchs 1.

Die Verwendung von Netzen, die auf einen Rahmen geklebt, mit dem Rahmen heißverprägt oder mit diesem mittels Ultraschall verschweißt werden, ist in Luftkanälen von Kraftfahrzeug-Befüftungssystemen bekannt. Derartige gerahmte Netze werden an unterschiedlichen Stellen bei Bedarf in einen Luftkanal eingesetzt oder ggf. auch direkt eingeklebt.

Aus der DE 197 50 381 A1 ist eine Kraftfahrzeug-Klimaanlage bekannt, bei welcher in einem Klimatisierungsgehäuse zwischen einer Luftmischkammer, welche nach einem Verdampfer und einem Heizer und Bypass hierzu angeordnet ist, und einer klappengeregelten Gesichtsöffnung im Kümatisierungsgehäuse, durch welche klimatisierte Luft über einen Gesichtsluftkanal in Richtung des Gesichtsbereichs eines Fahrzeuginsassens strömt, ein Netzwerkabschnitt zur Reduzierung eines Säulenresonanzgeräusches in einem Heizluftdurchlass, der nach dem Heizer und vor der Luftmischkammer angeordnet ist, vorgesehen ist. Der Netzwerkabschnitt weist einen U-förmigen Rahmen mit einer Öffnung am oberen Ende und ein Netz bzw. ein Maschenwerk, dessen Außenrand durch den Rahmen getragen ist. Der Rahmen und das Netz bestehen aus Kunstharz bzw. Kunststoff oder aus Metall. Die Maschengröße des Netzes beträgt #24. Der Netzabschnitt ist im .Klimatisierungsgehäuse durch Einführen des Rahmens in Nuten getragen und fixiert, die am Klimatisierungsgehäuse ausgebildet sind. Der Netzabschnitt erstreckt sich nur Ober einen Teil der entsprechenden Querschnittsfläche im Klimatisierungsgehäuse.

Ferner ist auch aus der US 2005/0076668A1 ein Luftkanal nach dem Oberbegriff des Anspruchs 1 bekannt, in welchem eine netzartige Gitterstruktur aus Kunststoff vorgesehen ist.

Es ist Aufgabe der Erfindung, ein verbessertes Kraftfahrzeug-Belüftungssystem zur Verfügung zu stellen. Hierbei sollen insbesondere zusätzliche Arbeitsschritte oder der Einsatz von Spezialmaschinen entfallen.

Diese Aufgabe wird gelöst durch ein Belüftungssystem mit den Merkmalen des Anspruchs 1. Vorteilhafte Ausgestaltungen sind Gegenstand der Unteransprüche.

Im Folgenden wird auf Luftdüsen oder andere mit Luftleit- und Regelelementen ausgestattete Einrichtungen am Ende eines Luftkanals, über welche Luft geregelt oder ungeregelt, gerichtet oder diffus dem Fahrzeuginnenraum zugeführt wird, als Ausströmer Bezug genommen.

Erfindungsgemäß ist ein Kraftfahrzeug-Belüftungssystem mit mindestens einem durch einen Teil eines Luftführungsgehäuses gebildeten Luftkanal mit mindestens einem Ausströmer, insbesondere Mittelausströmer, vorgesehen, wobei im Luftkanal mindestens eines Ausströmers, insbesondere bevorzugt des Mittelausströmers eine netzartige Gitterstruktur angeordnet ist, welche zumindest bereichsweise mit Kunststoff umspritzt und/oder einstückig aus Kunststoff gespritzt ist Die netzartige Gitterstruktur, insbesondere im Bereich des Mittelausströmers dient der Vergleichmäßigung der durch die Mittelausströmer und Seitenausströmer ausströmenden Luftmenge und -geschwindigkeit und zur Erhöhung des Staudruckes in der Heiz- und/oder Klimaanlage. Durch entsprechende Wahl der Lochgrößen, wie auch deren Form, lässt sich, ggf. auch bei optischer Vergleichbarkeit der Ausströmer, der unterschiedlich lange Strömungsweg zu den einzelnen Ausströmern ausgleichen, so dass keine Asymmetrien in Hinblick auf die Luftverteilung bei gleichen Einstellungen der einzelnen Ausströmer auftreten, welche den Komfort der Insassen beeinträchtigen würde.

Der Luftkanal ist im Bereich des Ausströmers mindestens zweiteilig ausgebildet, insbesondere bevorzugt genau zweiteilig ausgebildet, so dass die Gitterstruktur direkt in den Luftkanal integriert ist und insbesondere nicht im Rahmen der Endmontage als Einzelteil eingeklebt werden muss. Die Gitterstruktur ist dabei einstückig Teil eines der Gehäuseteile, insbesondere bevorzugt des Gehäuseunterteils, des Luftkanals.

Vorzugsweise ist mindestens ein Versteifungssteg im Bereich der Gitterstruktur vorgesehen, weicher die Gitterstruktur, welche fein ausgebildet ist, versteift.

Der Versteifungssteg kann um die Gitterstruktur gespritzt sein, so dass die Gitterstruktur, d.h. die in der Regel fein ausgebildete, netzartige Struktur, im Bereich des Versteifungssteges zumindest zur Hälfte vom Material des Versteifungsstegs umgeben ist. Wird die Gitterstruktur durch verwobene Fasern gebildet, so werden Bereiche der einzelnen Fasern vom Material des Verbindungsstegs zumindest über die Hälfte des Umfangs umspannt, vorzugsweise jedoch über den gesamten Umfang. Als Material für die gewobene netzartige Struktur sind insbesondere Nylon, PA, PET, PP, Alu, Stahl, Karbon, Glasfasermaterialien oder textile Fasern geeignet.

Der Versteifungssteg ist alternativ und besonders bevorzugt einstückig mit der Gitterstruktur gespritzt, d.h. auch das Gitter wird im Rahmen der Herstellung des Gehäuseteils spritzgegossen, so dass kein Netz o.ä. eingespritzt werden muss. Die Ausgestaltung aus einem Material ist auch besonders vorteilhaft in Hinblick auf das Recycling. Als Material für das spritzgegossene Netz ist insbesondere PP, PP-T20, PA, PP-HC, POM, ABS, PU, oder PE geeignet.

Vorzugsweise ist eine Mehrzahl von Versteifungsstege vorgesehen, welche eine waben- oder gitterförmige Gestalt aufweisen, wobei sich zumindest ein Teil der Versteifungsstege an Knotenpunkten treffen, die beabstandet vom Rahmen und Gehäuseteil angeordnet sind, also im Bereich der Luftdurchströmfläche der Gitterstruktur liegen. Insbesondere geeignet sind sechseckige Waben.

Bevorzugt wird die Gitterstruktur durch eine überlagerte netzartige Struktur und eine wabenartige Struktur, insbesondere aus einem Material, gebildet. Dabei ist die Lochgröße der netzartigen Struktur deutlich kleiner als diejenige der wabenartigen Struktur. An dieser Stelle sei noch erwähnt, dass unter der Lochgröße in weiterer Folge in etwa der Durchmesser des größtmöglichen Kreises der innerhalb eines, eine Zelle der Struktur bildenden Polygonzuges liegt, zu verstehen ist. So ist dies beispielsweise im Falle eines regelmäßigen Polygonzuges, der Innkreis.

Die mittlere Lochgröße beträgt vorzugsweise 0,1 - 8 mm, insbesondere bevorzugt 1 bis 3 mm. Derartige Lochgrößen ermöglichen eine geeignete Verringerung der Luftströmungsgeschwindigkeit im Bereich der Mittelausströmer und bewirken einen ausreichend hohen Staudruck in einer herkömmlichen, zentral angeordneten Klimaanlage, welche Teil des Belüftungssystems ist.

Im Folgenden wird ein erfindungsgemäßes Belüftungssystem anhand mehrerer Ausführungsbeispiele unter Bezugnahme auf die Zeichnung im Einzelnen erläutert. In der Zeichnung zeigen:
- Fig. 1: eine perspektivische Ansicht eines Mitteldosen-Luftkanalendes in Explosionsdarstellung gemäß dem ersten Ausführungsbeispiel,

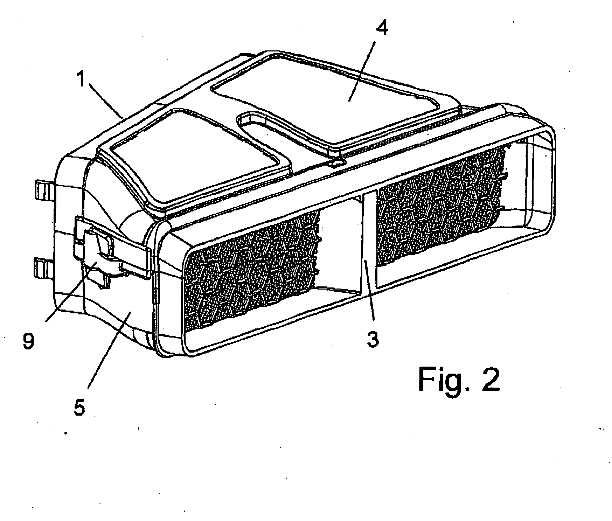

- Fig. 2: das Luftkanalende von Fig. 1 in zusammengebautem Zustand,
- Fig. 3: eine perspektivische Ansicht eines Mitteldüsen-Luftkanalendes in Explosionsdarstellung gemäß dem zweiten Ausführungsbeispiel,
- Fig. 4: das Luftkanalende von Fig. 3 in zusammengebautem Zustand,
- Fig. 5: eine perspektivische Ansicht eines Mitteldüsen-Luftkanalendes in Explosionsdarstellung gemäß dem dritten Ausführungsbeispiel,
- Fig. 6: das Luftkanalende von Fig. 5 in einem teilweise zusammengebauten Zustand ohne Darstellung des Gehäuseoberteils, und
- Fig. 7: das Luftkanalende von Fig. 5 im zusammengebauten Zustand.

Ein Kraftfahrzeug-Belüftungssystem weist eine auf bekannte Weise ausgebildete, in der Mittellängsebene des Kraftfahrzeugs angeordnete Klimaanlage mit einem Gebläse, einem Verdampfer und Heizer, ggf. auch Zuheizer, auf, die in einem Gehäuse angeordnet sind. Ausgehend von diesem Gehäuse ist eine Mehrzahl von Luftkanälen 1 ausgebildet, welche zur Fond- und Frontbelüftung, zum Fond- und Frontfußraum und zur Windschutzscheibe für den Defrostbetrieb führen. Für die Frontbereich sind sowohl für die Fahrerals auch Beifahrerseite jeweils einen Seitenausströmer und einen Mittelausströmer 2 vorgesehen, wobei die Mittelausströmer 2 vorliegend zusammengefasst, jedoch mittels einer Trennwand 3 getrennt mittels nicht dargestellter Stellorgane, wie Lamellen und/oder Düsen, regelbar sind.

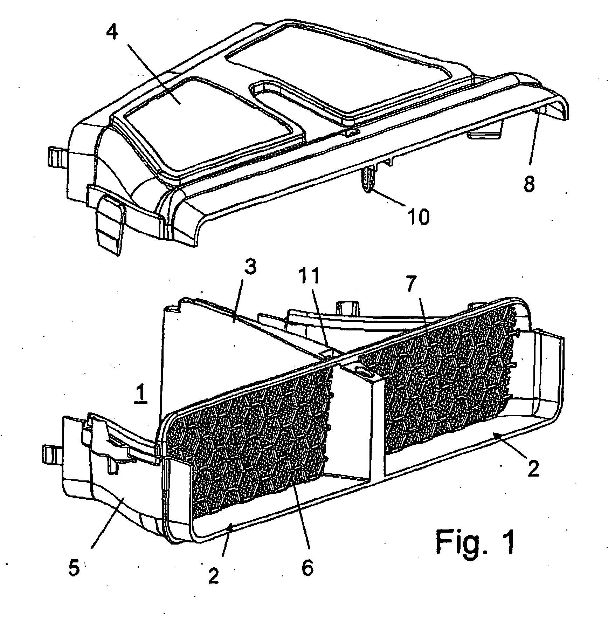

Das Ende des Luftkanals 1 zu den Mitteiausströmern 2 ist in der Zeichnung dargestellt. Der Luftkanal 1 ist durch ein zweiteiliges Gehäuse mit einem Gehäuseoberteil 4 und einem Gehäuseunterteil 5 gebildet. Dabei ist keine mittige Teilung der Gehäuseteile vorgesehen, vielmehr ist das Gehäuseunterteil 5 größer als das als Deckel ausgebildete Gehäuseoberteil 4. Benachbart zum Luftkanalende, also in der Nähe des luftaustrittsseitigen Endes der Mittelausströmer 2, ist eine gespritzte Gitterstruktur 6 direkt in dem Gehäuseunterteil 5 ausgebildet. Die Gitterstruktur 6 weist eine feine netzartige, schräg angeordnete Struktur, deren Zellen etwa quadratisch mit einer Seitenlänge von 1,5 mm ausgeführt sind und eine die netzartige Struktur überlagernde sechseckigen Wabenstruktur mit deutlich größerer Lochgröße und deutlich größerer Dicke der Stege auf, welche der Stabilisierung der feinen netzartigen Struktur dient. Die Lochgröße der Wabenstruktur beträgt vorzugsweise das fünf- bis zwanzigfache der netzartigen Struktur. Die Wabenstruktur bildet somit Versteifungsstege. Die Herstellung der beiden Strukturen erfolgt vorliegend in einem Arbeitsgang mit der Herstellung des Gehäuseunterteils 5 mittels Spritzgießens aus Kunststoff. Hierbei ist auf den nicht vom Gehäuseunterteil 5 eingefassten, d.h. direkt angespritzten Seiten ein außen umlaufender stabilisierender Rand 7 ausgebildet. Ferner ist die Trennwand 3 bis über die netzartige Struktur und die Wabenstruktur zur definierten Unterteilung der Luftströme und zur Erhöhung der Stabilität hinausgeführt (siehe Fig. 1), wobei sie sich in Luftströmungsnchtung von der netzartigen Struktur ausgehend leicht verjüngt.

Gemäß einer Variante ist ein Netz mit entsprechender Lochgröße auf entsprechende Weise eingespritzt, d.h. das Gehäuseunterteil mit der Wabenstruktur, also den Versteifungsstegen, wie auch die Trennwand, wird in einem Arbeitsgang aus Kunststoff um das Netz gespritzt. Das Netz kann beispielsweise aus Kunststofffäden, textilen Fäden und/oder Metallfäden gewoben sein. Andere Herstellungsverfahren sind möglich, wie insbesondere Stricken oder Wirken.

Anstelle einer Wabenstruktur mit sechseckigen Waben kann auch eine andere Wabenstruktur verwendet werden. Die Strukturen der netzartigen Struktur und/oder Waben bzw. des Gitters müssen nicht notwendigerweise über die gesamte, von Luft durchströmte Fläche des Mittelausströmers gleich ausgebildet sein, vielmehr kann - insbesondere zur Beeinflussung der Strömung und Stabilität - über die Fläche variiert werden.

Das Gehäuseoberteil 4 ist ohne Gitterstruktur 6 ausgebildet, weist jedoch für die Aufnahme der am Gehäuseunterteil 5 ausgebildeten Gitterstruktur 6 eine Nut 8 auf, die der Aufnahme des Randes 7 dient.

Gehäuseober- und -unterteil 4 und 5 werden im Rahmen der Montage vorliegend mittels Clipsverbindungen 9 miteinander, wie auch mit dem benachbarten Kanalstück verbunden. Für eine schnelle und exakte Positionierung ist mindestens ein vorliegend einstückig mit dem Gehäuseteil gespritzter Stift 10 vorgesehen, welcher in eine entsprechende Öffnung 11 des anderen Gehäuseteils beim Zusammensetzen geführt wird. Zusätzlich wird eine Verschiebung der Gehäuseteile in Längsrichtung gegeneinander durch den Rand 7, welcher in der Nut 8 positioniert ist verhindert. Somit entfällt eine getrennte Montage, bspw. mittels Anklebens oder Einsetzen, eines Netzes o.ä. und die Montage wird vereinfacht und beschleunigt.

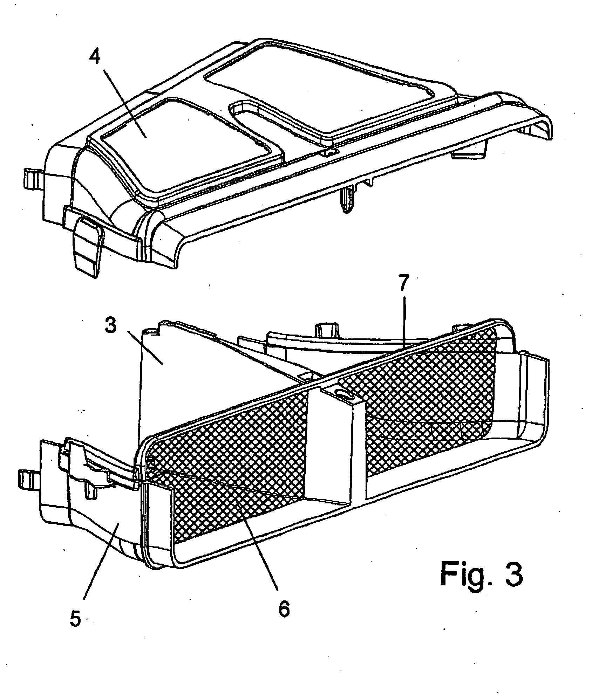

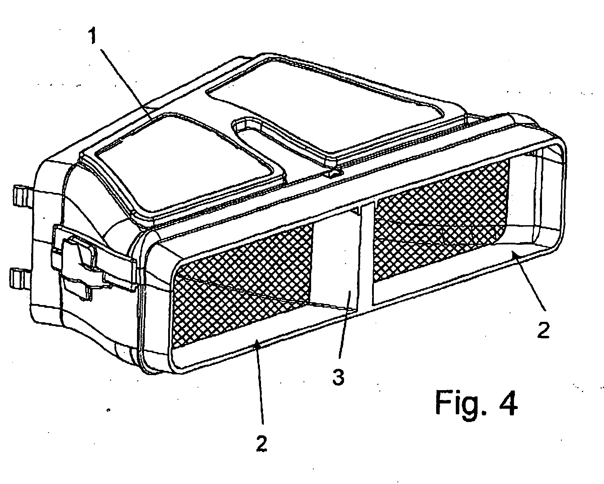

Gemäß dem in den Figuren 3 und 4 dargestellten, zweiten Ausführungsbeispiel ist ein Luftkanal 1 mit zwei durch eine Trennwand 3 getrennte Mittelausströmern 2 vorgesehen, welcher in Hinblick auf die Gestalt des Luftkanals 1 entsprechend dem ersten Ausführungsbeispiel ausgebildet ist. Im Unterschied zum ersten Ausführungsbeispiel ist jedoch ein gewebtes Netz mit einer Lochgröße, weicher derjenigen der netzartigen Struktur ersten Ausführungsbeispiels entspricht, aus einem textilen Material direkt in das Gehäuseunterteil 5 eingespritzt, wobei während des Umspritzen des Netzes neben dem Gehäuseteil auch der stabilisierende Rand 7 spritzgegossen wird. Eine Wabenstruktur neben der Struktur, die durch das Netz gebildet wird, ist gemäß dem zweiten Ausführungsbeispiel nicht vorgesehen, d.h. die Gitterstruktur 6 wird ausschließlich durch das Netz gebildet. Der Zusammenbau erfolgt entsprechend dem ersten Ausführungsbeispiel.

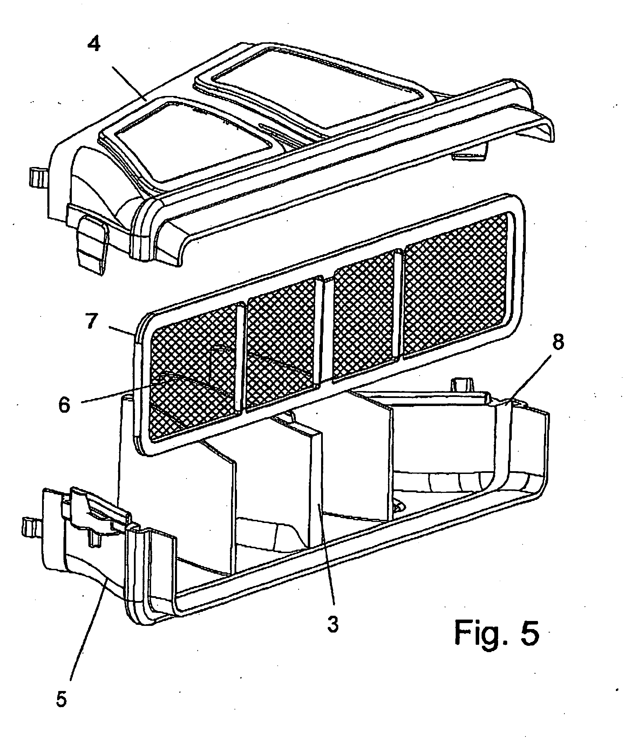

Die Gestalt der beiden Gehäuseteile des Luftkanals 1 gemäß dem in den Figuren 5 bis 7 dargestellten dritten Ausführungsbeispiel entspricht - sofern nachfolgen nicht ausdrücklich erwähnt - der des ersten und zweiten Ausführungsbeispiels,

Im Inneren des Luftkanals 1 sind neben der Trennwand 3 noch zwei Luftleitwände zur Optimierung der Luftströmung vorgesehen, welche sich in Luftströmungsrichtung bis zur Gitterstruktur 6 erstrecken. Ferner ist die Trennwand 3 nur bis zur Gitterstruktur 6 vorgezogen und nicht darüber hinaus, wobei sie, wie auch die Luftleitwände, als Anlagefläche nach hinten, also entgegen der Luftströmungsrichtung, für dieselbe dient.

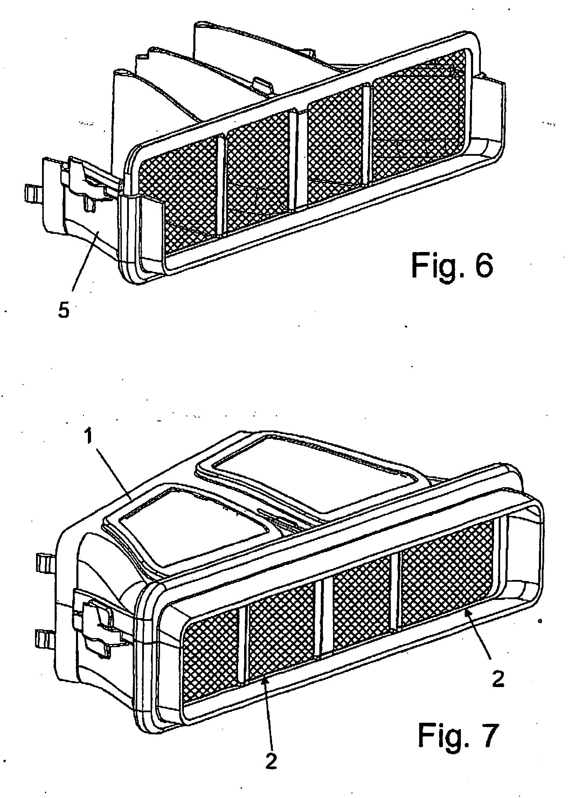

Im Unterschied zu den vorigen Ausführungsbeispielen ist zudem die Gitterstruktur 6 samt Rand 7, gebildet durch ein mit Kunststoff umspritztes textiles Netz, getrennt vom Gehäuseunterteil 5 ausgebildet, so dass, wie im Gehäuseoberteil 4, auch im Gehäuseunterteil 5 eine Nut 8 zur Aufnahme des Randes 7 des Netzes vorgesehen und der Rand 7 um die gesamte, von Luft durchströmte Fläche umlaufend ausgebildet ist. Um die der Gitterstruktur 6 zur vom Rand 7 verliehenen Festigkeit zu erhöhen und um das Netz vor Beschädigungen durch die Trennwand 3 und die Luftleitwände zu schützen, sind Versteifungsstege vorgesehen, welche im montierten Zustand mit den Luftleitwänden und der Trennwand 3 fluchten (siehe Fig. 6). Die Lochgröße entspricht wiederum derjenigen des ersten Ausführungsbeispiels.

Der Zusammenbau des Luftkanalendes erfolgt entsprechend den in den Figuren 5 bis 7 dargestellten Schritten, nämlich durch das Einsetzen der Gitterstruktur 6 in das Gehäuseunterteil 5 und das anschließende Aufsetzen und Verclipsen des Gehäuseoberteils 4. Anschließend kann das Luftkanalende an den weiteren, entgegen der Luftströmungsrichtung liegenden Luftkanalverlauf angeschlossen werden.

In Folge der mehrteiligen Ausgestaltung vereinfacht sich die Form der Gießformen oder ermöglicht eine größere Gestaltungsfreiheit, insbesondere in Hinblick auf die Ausgestaltung des Luftkanals, insbesondere können Gehäuseober- und -unterteil gegebenenfalls auch als Gleichteile ausgebildet sein, jedoch ist ein zusätzlicher Arbeitsschritt durch das Einsetzen der Gitterstruktur erforderlich.

## Patentansprüche

1. Kraftfahrzeug-Belüftungssystem mit mindestens einem durch einen Teil eines Luftführungsgehäuses gebildeten Luftkanal (1) mit mindestens einem Ausströmer, insbesondere Mittelausströmer (2), wobei im Luftkanal (1) eine netzartige Gitterstruktur (6) angeordnet ist, welche zumindest bereichsweise mit Kunststoff umspritzt und/oder einstückig aus Kunststoff gespritzt ist, **dadurch gekennzeichnet, dass** der Luftkanal (1) im Bereich des Ausströmers (2) durch ein mindestens zweiteiliges Gehäuse mit einem Gehäuseoberteil (4) und einem Gehäuseunterteil (5) gebildet ist, und die Gitterstruktur (6) von dem Gehäuseoberteil (4) und dem Gehäuseunterteil (5) eingefasst und einstückig Teil eines der Gehäuseteile (4 oder 5) des Luftkanals (1) ist.

2. Kraftfahrzeug-Belüftungssystem nach Anspruch 1, **dadurch gekennzeichnet, dass** der Luftkanal (1) im Bereich des Ausströmers (2) genau zweiteilig ausgebildet ist.

3. Kraftfahrzeug-Belüftungssystem nach einem der vorhergehenden Ansprüche, **dadurch gekennzeichnet, dass** mindestens ein Versteifungssteg im Bereich der Gitterstruktur (6) vorgesehen ist.

4. Kraftfahrzeug-Belüftungssystem nach Anspruch 3, **dadurch gekennzeichnet, dass** der Versteifungssteg um die Gitterstruktur (6) gespritzt ist.

5. Kraftfahrzeug-Belüftungssystem nach Anspruch 3, **dadurch gekennzeichnet, dass** der Versteifungssteg einstückig mit der Gitterstruktur (6) gespritzt ist.

6. Kraftfahrzeug-Belüftungssystem nach einem der vorhergehenden Ansprüche, **dadurch gekennzeichnet, dass** an den nicht von dem einstückig mit der Gitterstruktur (6) gebildeten Gehäuseteil (4, 5) eingefassten, d.h. nicht direkt angespritzten Seiten der Gitterstruktur (6) ein außen umlaufender stabilisierender Rand (7) ausgebildet ist.

7. Kraftfahrzeug-Belüftungssystem nach Anspruch 6, **dadurch gekennzeichnet, dass** eine Mehrzahl von Versteifungsstegen vorgesehen ist, welche eine waben- oder gitterförmige Gestalt aufweisen, wobei sich zumindest ein Teil der Versteifungsstege an Knotenpunkten treffen, die beabstandet vom Rand (7) und Gehäuseteil (5) angeordnet sind.

8. Kraftfahrzeug-Belüftungssystem nach einem der vorhergehenden Ansprüche, **dadurch gekennzeichnet, dass** die Gitterstruktur (6) von einer wabenartigen Struktur überlagert ist.

9. Kraftfahrzeug-Belüftungssystem nach einem der vorhergehende Ansprüchen, **dadurch gekennzeichnet, dass** das die mittlere Lochgröße der Gitterstruktur (6) 0.1 - 8 mm, insbesondere 1 bis 3 mm, beträgt.

## Claims

1. A motor vehicle ventilation system, comprising at least one air duct (1) which is formed by part of am air conduction housing and has at least one air vent, in particular a central air vent (2), a mesh-like lattice structure (6), which is insert-molded at least in some regions using plastic and/or integrally molded using plastic, being arranged in the air duct (1), **characterized in that** in the region of the air vent (2) the air duct (1) is formed by an at least two-part housing having an upper housing part (4) and a lower housing part (5), and the lattice structure (6) is enclosed by the upper housing part (4) and the lower housing part (5) and forms an integral part of one of the housing parts (4 or 5) of the air duct (1).

2. The motor vehicle ventilation system according to claim 1, **characterized in that** in the region of the air vent (2) the air duct (1) is designed exactly as two pieces.

3. A motor vehicle ventilation system according to any one of the preceding claims, **characterized in that** at least one reinforcing rib is provided in the region of the lattice structure (6).

4. The motor vehicle ventilation system according to claim 3, **characterized in that** the reinforcing rib is molded around the lattice structure (6).

5. The motor vehicle ventilation system according to claim 3, **characterized in that** the reinforcing rib is integrally molded with the lattice structure (6).

6. A motor vehicle ventilation system according to any one of the preceding claims, **characterized in that** an outside peripheral stabilizing edge (7) is formed at the sides of the lattice structure (6) not enclosed by the housing part (4, 5) integrally molded with the lattice structure (6), which is to say the sides thereof that not directly molded on.

7. The motor vehicle ventilation system according to claim 6, **characterized in that** a plurality of reinforcing ribs are provided, which have a honeycomb or lattice-like design, wherein at least some of the reinforcing ribs meet at junction points which are disposed at a distance from the edge (7) and the housing part (5).

8. A motor vehicle ventilation system according to any one of the preceding claims, **characterized in that** the lattice structure (6) is superimposed with a honeycomb-like structure.

9. A motor vehicle ventilation system according to any one of the preceding claims, **characterized in that** the average hole size of the lattice structure (6) is 0.1 - 8 mm, in particular 1 to 3 mm.

## Revendications

1. Système de ventilation pour véhicule automobile, comprenant au moins un conduit d'air (1) formé par une partie d'un carter de guidage d'air et comportant au moins un diffuseur, en particulier un diffuseur central (2), où, dans le conduit d'air (1) est disposée une structure (6) en forme de grille, de type réticulaire, qui, au moins partiellement, est enrobée de matière plastique appliquée par injection et / ou est moulée par injection en formant une seule et même pièce en matière plastique,
**caractérisé en ce que** le conduit d'air (1), dans la zone du diffuseur (2), est formé par un carter, en au moins deux parties, comprenant une partie supérieure (4) du carter et une partie inférieure (5) du carter, et la structure (6) en forme de grille est emboîtée par la partie supérieure (4) du carter et par la partie inférieure (5) du carter et fait partie de l'une des parties de carter (4 ou 5) du conduit d'air (1) en formant une pièce d'un seul tenant.

2. Système de ventilation d'un véhicule automobile selon la revendication 1, **caractérisé en ce que** le conduit d'air (1) est configuré précisément en deux parties, dans la zone du diffuseur (2).

3. Système de ventilation d'un véhicule automobile selon l'une ou l'autre des revendications précédentes, **caractérisé en ce qu'**il est prévu au moins une nervure de renfort dans la zone de la structure (6) en forme de grille.

4. Système de ventilation d'un véhicule automobile selon la revendication 3, **caractérisé en ce que** la nervure de renfort est moulée par injection autour de la structure (6) en forme de grille.

5. Système de ventilation d'un véhicule automobile selon la revendication 3, **caractérisé en ce que** la nervure de renfort est moulée par injection en formant une seule et même pièce avec la structure (6) en forme de grille.

6. Système de ventilation d'un véhicule automobile selon l'une quelconque des revendications précédentes, **caractérisé en ce qu'**un bord circulaire (7) de stabilisation, placé à l'extérieur, est configuré sur les côtés de la structure (6), en forme de grille, non encastrés par la partie de carter (4, 5) formée en constituant une seule et même pièce avec la structure (6) en forme de grille, c'est-à-dire non directement appliqués par injection.

7. Système de ventilation d'un véhicule automobile selon la revendication 6, **caractérisé en ce qu'**il est prévu une pluralité de nervures de renfort qui présente une configuration en forme de nid d'abeilles ou de grille, où au moins une partie des nervures de renfort se rencontre au niveau de points de jonction qui sont disposés à distance du bord (7) et de la partie de carter (5).

8. Système de ventilation d'un véhicule automobile selon l'une quelconque des revendications précédentes, **caractérisé en ce qu'**une structure en forme de nid d'abeilles est superposée à la structure (6) en forme de grille.

9. Système de ventilation d'un véhicule automobile selon l'une quelconque des revendications précédentes, **caractérisé en ce que** la taille moyenne des trous de la structure (6) en forme de grille est comprise entre 0,1 mm et 8 mm, en particulier entre 1 mm et 3 mm.
